# EUROPEAN PATENT SPECIFICATION

(11) **EP 2 883 455 B1**
(45) Date of publication and mention of the grant of the patent: **04.05.2016**
(21) Application number: 14195678.9
(22) Date of filing: 01.12.2014
(51) Int. Cl.: A22C 7/00, A22C 11/00, F16J 1/06

(54) **Machine for processing food products**
Lebensmittelverarbeitungsvorrichtung
Dispositif de traitement de produits alimentaires

(30) Priority: 13.12.2013 IT VR20130282
(43) Date of publication of application: 17.06.2015
(73) Proprietor: INOX Meccanica S.R.L., 46044 Goito, Frazione Solarolo MN (IT)
(72) Inventor: Bolzacchini, Giovanni, 46044 Goito - Frazione Solarolo MN (IT)
(74) Representative: Modiano, Micaela Nadia

(56) References cited:
- US-A- 1 473 446
- US-A- 2 419 714
- US-A- 4 744 130
- US-A1- 2006 280 850

## Description

The present invention relates to a machine for processing food products.

Machines are currently in use in the food sector, such as for example machines for forming and encasing salami or the like, which have a chamber for conveying the food product to be processed, within which a pusher is provided that can perform a translational motion and is designed to press the product toward an output end of the conveyance chamber, for the purpose of executing a processing step of the food product, such as, for example, an extrusion step or an encasing step or the like.

Typically the pusher comprises a piston, usually constituted by a cylindrical body made of plastic material, which is provided with a flat thrust face that is intended to come into contact with the food product loaded in the conveyance chamber, and is moved by an actuation cylinder, which is arranged at the other end of the piston with respect to its flat thrust face.

Some types of machines are provided with a conveyance chamber that has, in its extension along the movement direction of the pusher, variations in the dimension of its transverse cross-section of passage of the food product, while the piston of the pusher is dimensioned according to the minimum dimension of the transverse cross-section of the conveyance chamber.

For example, there are machines in which the conveyance chamber has a progression, along the movement direction of the pusher, which is substantially that of a truncated cone, with a dimension of the transverse cross-section of passage of the food product that becomes progressively reduced toward the exit of the conveyance chamber.

In such situations, the lateral surface of the piston with respect to its movement direction is not constantly in contact with the inner side wall of the conveyance chamber.

The absence of contact between the lateral surface of the piston and the inner side wall of the conveyance chamber, during the translational movement of the piston, can result in part of the food product remaining inside the conveyance chamber, with consequent problems of cleaning and maintenance of the machine as well as loss of product upon exiting the conveyance chamber.

The aim of the present invention is to provide a valid solution to the above problem by providing a machine for processing food products which is capable of offering the highest assurances that all the food product loaded in the conveyance chamber will be entrained toward its exit.

Another object of the present invention is to provide a machine for processing food products which is provided with a pusher, which is simple in construction and highly reliable.

Another object of the present invention is to make available a machine for processing food products in which the pusher can be easily disassembled into its components in order to enable an optimal cleaning and hygiene thereof.

This aim and these and other objects which will become better apparent hereinafter are achieved by a machine for processing food products, according to the invention, as defined in claim 1.

Further characteristics and advantages of the invention will become better apparent from the description of two preferred, but not exclusive, embodiments of the machine for processing food products according to the invention, which are illustrated by way of non-limiting example in the accompanying drawings wherein:
Figure 1 is a perspective view of a piston belonging to a pusher of the machine according to the invention in a first embodiment;
Figure 2 is a side view of the piston in Figure 1, in a portion of a duct for conveying food products;
Figure 3 is a cross-sectional view of the piston taken along the line III-III in Figure 2;
Figure 4 is a side view of the piston in Figure 1 in a portion of the conveyance duct with a transverse cross-section larger than the portion in Figure 2;
Figure 5 is a cross-sectional view of the piston taken along the line V-V in Figure 4;
Figure 6 is a perspective view of a second embodiment of the piston belonging to the pusher of the machine according to the invention;
Figure 7 is a front elevation view of the piston in Figure 6;
Figure 8 is a side view of the piston in Figure 6, in a portion of a conveyance duct of the machine according to the invention;
Figure 9 is a cross-sectional view taken along the line IX-IX in Figure 7;
Figures 10 and 11 are cross-sectional views taken respectively along the lines X-X and XI-XI in Figure 8;
Figure 12 is a perspective view of the piston according to the embodiment in Figure 6 with a lateral portion thereof in the contracted condition;
Figure 13 is a front elevation view of the piston in the condition in Figure 12;
Figure 14 shows the piston according to the embodiment in Figure 6 in a portion of the conveyance duct of the machine according to the invention with a smaller dimension of its transverse cross-section than the portion in Figure 8;
Figure 15 is a cross-sectional view taken along the line XV-XV in Figure 13;
Figure 16 is a cross-sectional view taken along the line XVI-XVI in Figure 14.

With reference to the figures, the machine for processing food products, according to the invention, comprises a structure in which a conveyance chamber 1 is defined in which the food products to be processed are loaded.

For example, the conveyance chamber 1 can be constituted by the forming chamber and by the encasing duct of a machine for forming and encasing salami or the like, or it can be constituted by an extrusion duct for food products of various types, such as meat, pasta or the like.

A pusher 2 can move within the conveyance chamber 1, and its function is to produce the movement of the food product loaded in the conveyance chamber 1.

More specifically, the pusher 2 has a piston 3 that can be actuated for translational motion along a movement direction 3a in order to press the food products toward an output end of the conveyance chamber 1.

In particular, the piston 3 is provided, conveniently, at one of its ends, with at least one flat thrust region or face 5 that is designed to come into contact with the food product contained in the conveyance chamber 1.

The actuation of the piston 3 can, for example, be achieved by a fluid-operated actuation cylinder or other adapted device, not shown, which is encompassed within the scope of the machine according to the invention and is arranged at the opposite end with respect to the flat thrust face of the piston 3.

The conveyance chamber 1 is structured so as to have at least one variation in the dimension of its transverse cross-section with respect to the movement direction 3a of the piston 3.

Such variation of dimension of the transverse cross-section of the conveyance chamber 1 can be gradual, as when the conveyance chamber 1 is substantially frustum-shaped along the movement direction 3a of the piston 3, or it can be abrupt or in the manner of a step, as with the transition from the forming chamber to the encasing tube in a machine for forming and encasing salami.

The pusher 2 has means for adjusting its transverse dimension with respect to the movement direction 3 a, which are adapted to produce an automatic expansion or contraction of at least one lateral portion 4 of the piston 3, with respect to a longitudinal axis 3b of the piston 3 which is substantially parallel to the movement direction 3a of the piston.

In this manner, at least such lateral portion 4 of the piston 3 is capable of being kept, during the movement of the piston 3 along its movement direction 3a, substantially in contact with the inner surface 1a of the conveyance chamber 1 located about the piston 3.

In more detail, the lateral portion 4 is loaded elastically so as to expand or contract, with respect to the longitudinal axis 3b of the piston 3, by way of its sliding on the inner surface 1a of the conveyance chamber 1 at the area or areas of the conveyance chamber 1 in which there is a variation in the dimension of its transverse cross-section.

Moving on to describe the various embodiments of the invention more specifically, the piston 3 comprises, conveniently, a main body 6 that defines the above mentioned longitudinal axis 3b of the piston 3 and which supports laterally the lateral portion 4.

In particular, the lateral portion 4 is, advantageously, mounted on the main body 6 so that it can move in a substantially radial direction with respect to the longitudinal axis 3b of the piston 3, in contrast with or by way of the action of elastic loading means.

Advantageously, the main body 6 of the piston 3 is made of a plastic material that is adapted to come into contact with food products.

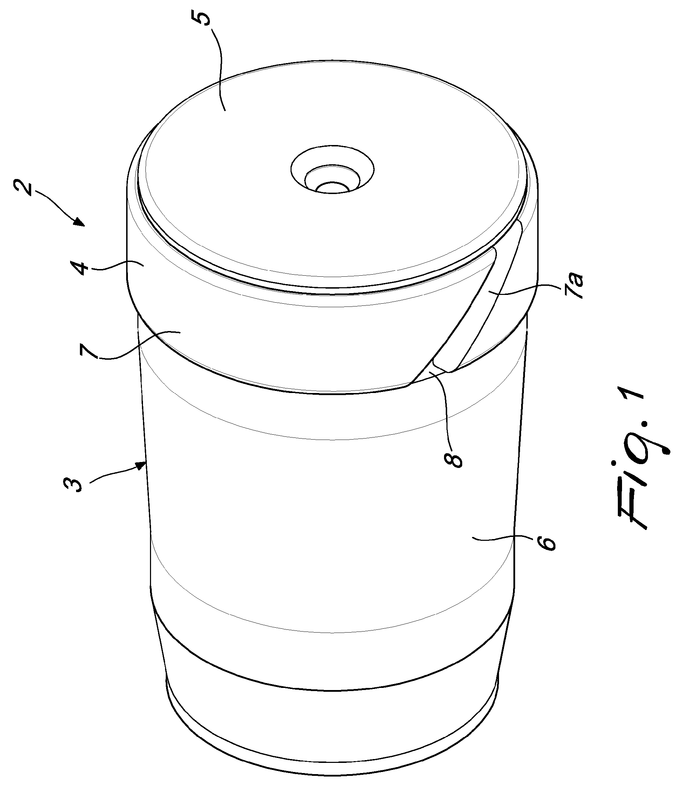

According to a first embodiment, illustrated in Figures 1 to 5, the lateral portion 4 is provided by at least one elastic annular body 7, with an open flat shape, which is fitted around the main body 6 of the piston, so as to be substantially coaxial thereto.

Conveniently, the elastic annular body 7 is accommodated in a circular slot 6a that is defined on the outer side wall of the main body 6 of the piston 3, with respect to the longitudinal axis 3b of the piston, so that the elastic annular body 7 is substantially locked axially with respect to the main body 6 of the piston 3.

In more detail, the elastic annular body 7 can be, conveniently, made of a plastic material that is adapted to come into contact with food products and is, preferably, open at a split 7a with edges that are mutually parallel, mutually opposite, and inclined with respect to the axis of the elastic annular body 7.

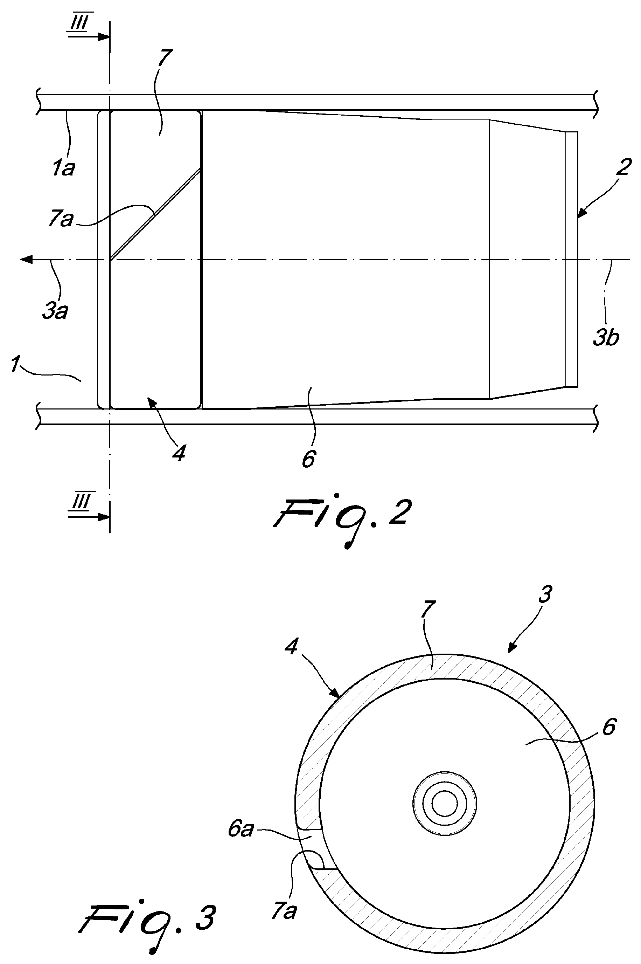

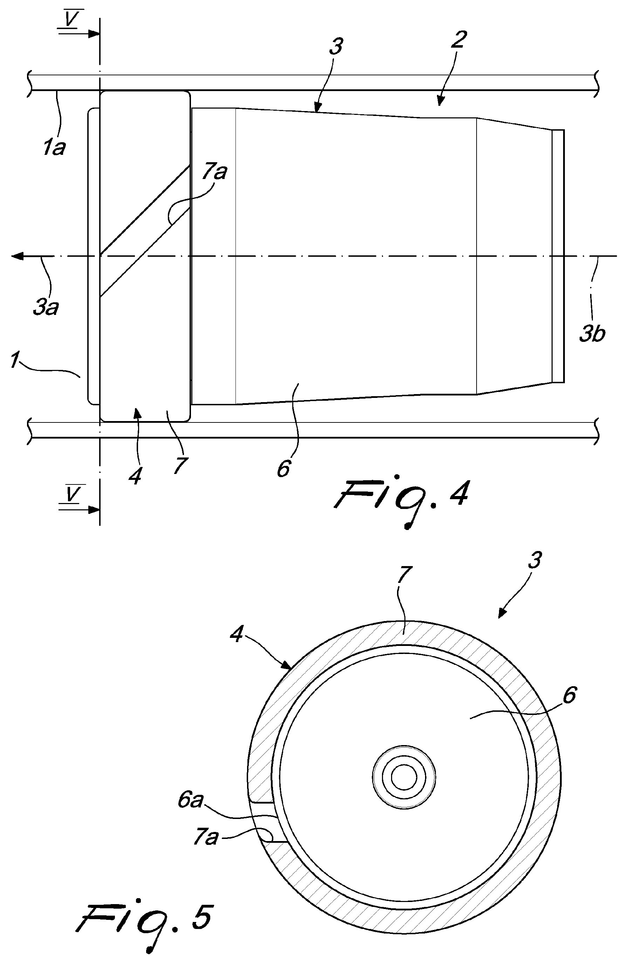

The elastic annular body 7 can thus pass from a spread or open condition, like the one shown, in particular, in Figures 4 and 5, to a narrowed or closed condition, like the one shown in Figure 2, in which the edges of the split 7a are brought close together and the elastic annular body 7 contracts toward the bottom of the circular slot 8, and vice versa.

Advantageously, the elastic annular body 7 has contoured axial edges, for example beveled or rounded, in order to facilitate its entry through the areas of the conveyance chamber 1 in which there is a reduction of the dimension of the transverse cross-section of the conveyance chamber.

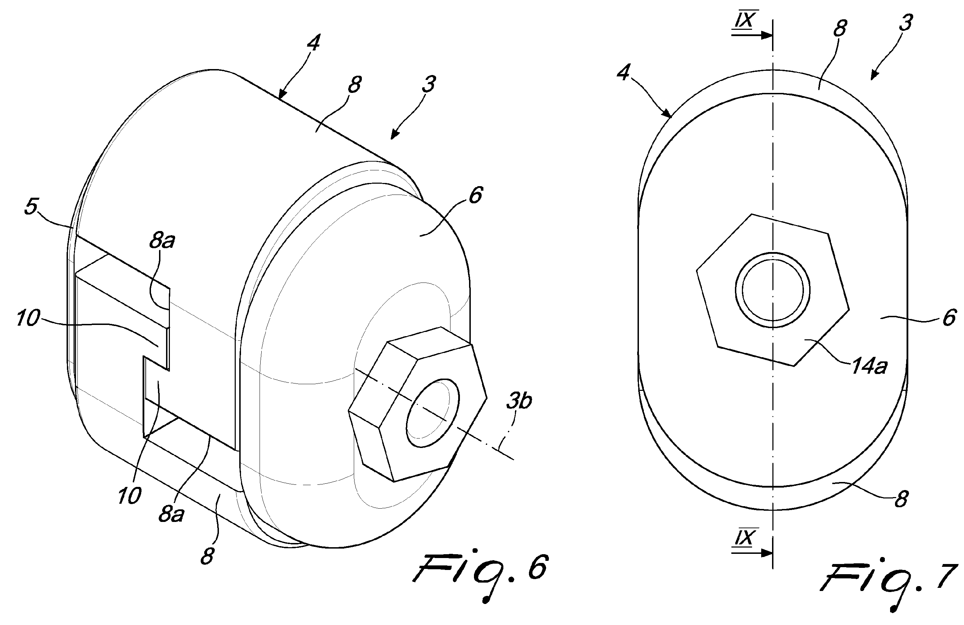

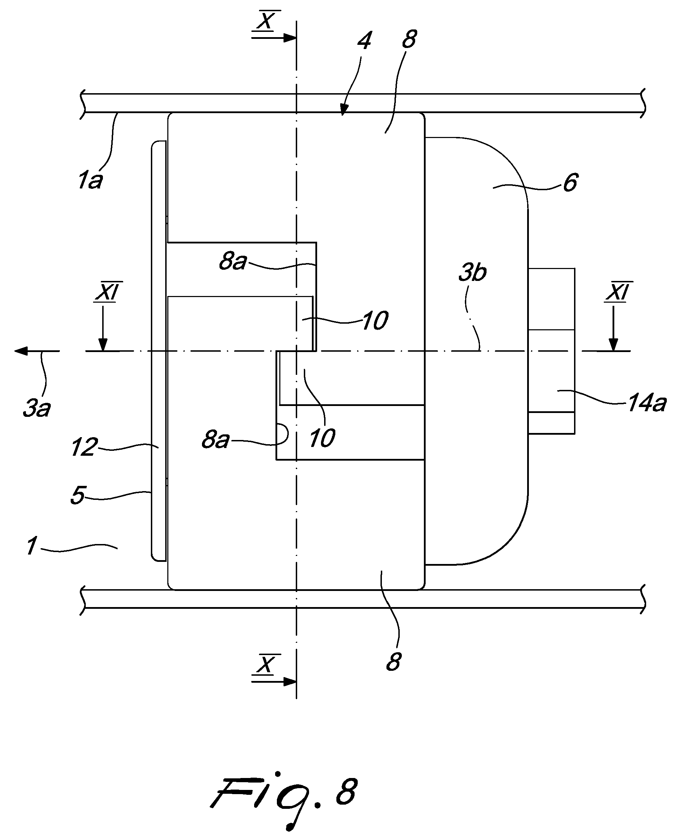

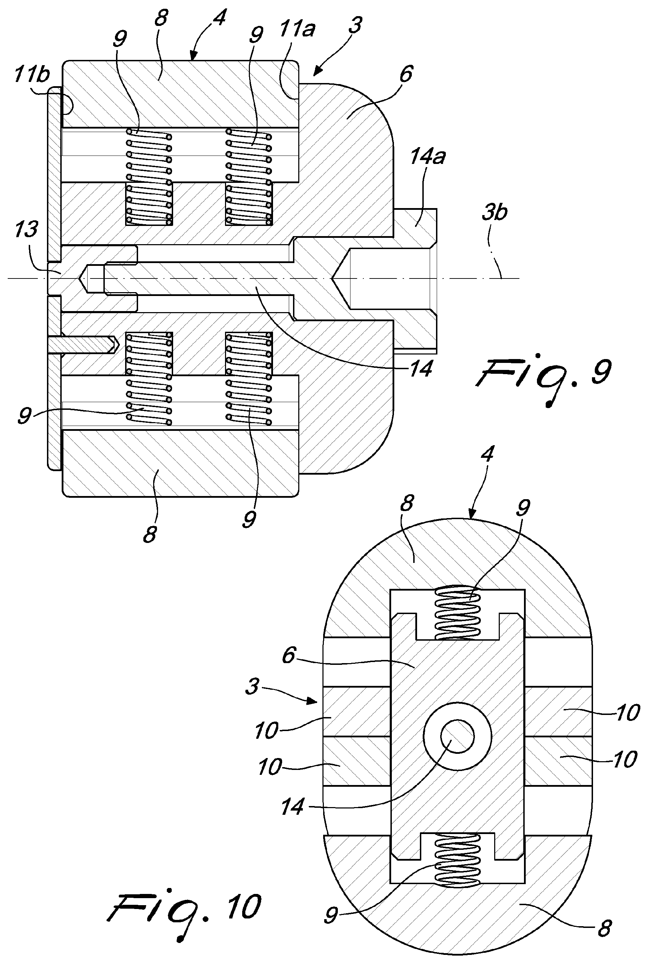

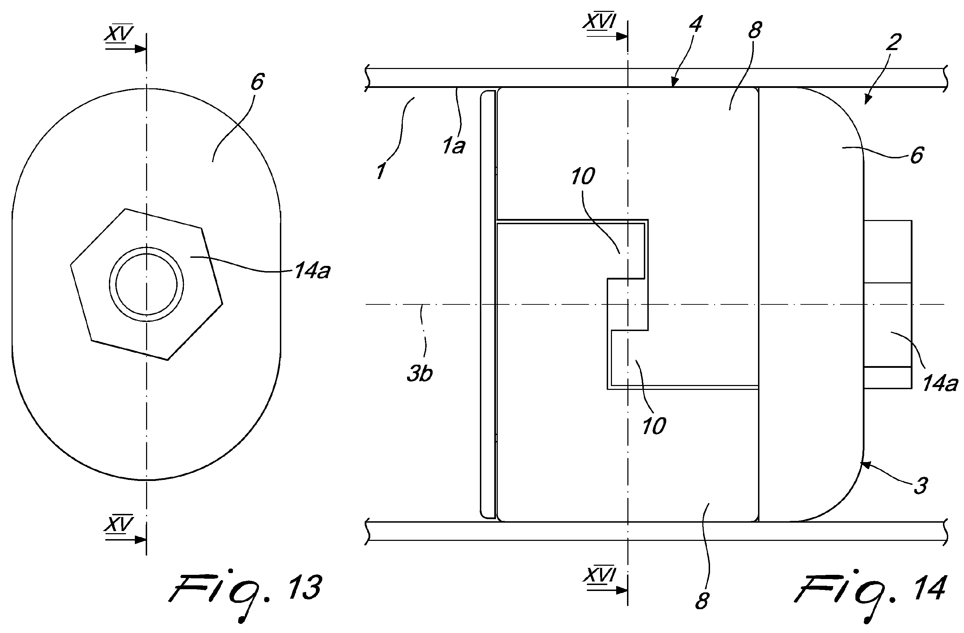

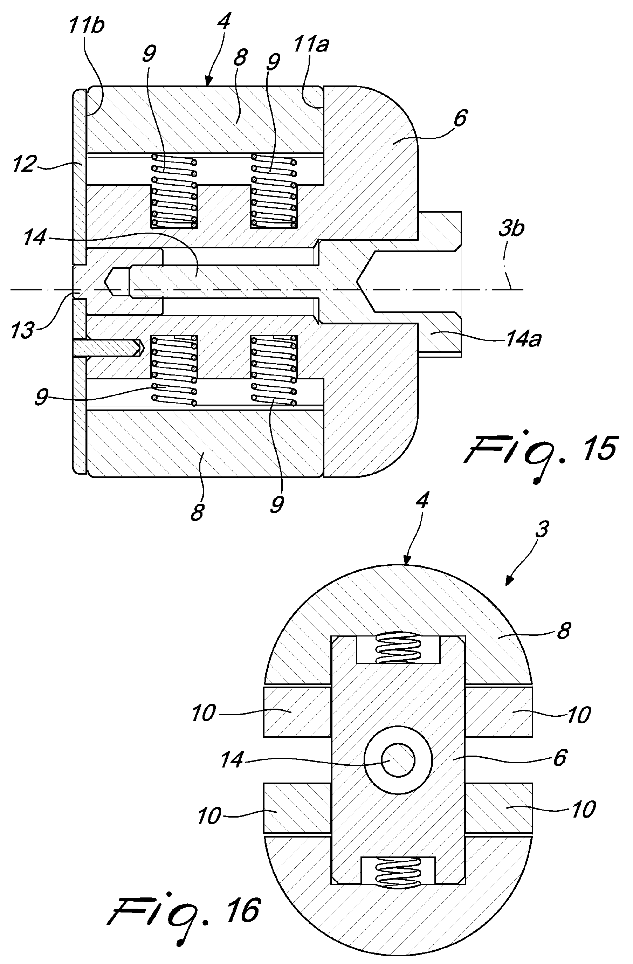

Figures 6 to 16 show a second embodiment that is particularly, but not exclusively, adapted to be used if the conveyance chamber 1 has, in transverse cross-section, with respect to the movement direction 3a of the piston 3, an elongated shape structure, such as, for example, a substantially ellipsoidal shape or the like, and the piston 3 must, thus, be provided with a corresponding shape.

In such embodiment, the lateral portion 4 comprises one or more peripheral bodies 8 that are mounted laterally on the main body 6 of the piston 3.

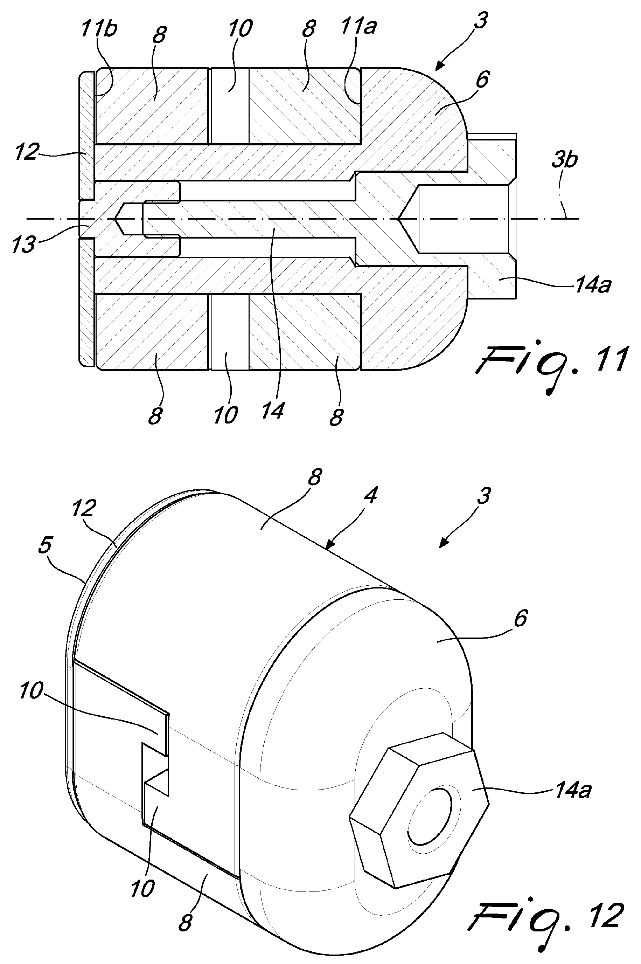

The peripheral bodies 8 can be radially movable with respect to the longitudinal axis 3b of the piston 3 between a nearer position, shown, in particular, in Figure 12, and a farther position, shown, in particular, in Figure 6.

Conveniently, elastic pusher means, constituted by one or more springs 9, act between the peripheral bodies 8 and the main body 6.

Preferably, as shown in the figures, there is at least one pair of peripheral bodies 8, which are arranged mutually opposite with respect to the longitudinal axis 3b of the piston 3.

The peripheral bodies 8 are, also, conveniently, made of a plastic material that is adapted to come into contact with food products.

Conveniently, stop portions are provided on each of the peripheral bodies 8 and can mutually engage when the peripheral bodies 8 are in the above mentioned farther position from the longitudinal axis 3b of the piston 3.

More specifically, such stop portions are constituted by at least a pair of abutment teeth 10, facing each other, which are intended to rest against each other, when the peripheral bodies 8 are pushed by the springs 9 into the farther position from the longitudinal axis 3b of the piston, in order to prevent the peripheral bodies 8 from being able to separate radially from the main body 6 of the piston 3. In particular, each peripheral body 8 has a respective pair of abutment teeth 10 arranged on respective sides of the same peripheral body 8. As illustrated, the abutment teeth 10 of one peripheral body 8 protrude axially in the opposite direction with respect to the abutment teeth 10 of the other peripheral body 8, in order to be inserted into respective transverse cavities 8a that are also defined on the other peripheral body 8.

Advantageously, the peripheral bodies 8 are arranged between a first axial abutment 11a, which is defined on the main body 6 of the piston 3, and a second axial abutment 11b, which is detachably associated with the main body 6 of the piston 3, in order to allow the disassembly of the peripheral bodies 8 from the main body 6, by way of an axial sliding thereof with respect to the main body 6, following the removal of the second axial abutment 11b, so as to facilitate the complete cleaning of the various components of the piston 3.

Preferably, the second axial abutment 11b is defined by a plate 12 that can be mated at one end of the main body 6 by way of an element with a female thread, such as for example a nut 13, welded to the plate 12, which can be engaged by a pin 14 with a male thread, which extends axially inside the main body 6 of the piston 3 and is provided with an enlarged head 14a, which is designed to abut against the opposite end of the main body 6.

By acting on the enlarged head 14a, by way of an adapted tool, it is possible to unscrew the pin 14 from the nut 13, so as to be able to uncouple the plate 12 from the main body 6 and thus proceed with the disassembly of the peripheral bodies 8.

Preferably, the plate 12 is arranged at the end of the piston 3 at which the flat thrust face 5 of the piston is defined.

Operation of the invention is the following.

The piston 3 is accommodated in the conveyance chamber 1 with its lateral portion 4 pushed radially by its elastic loading means so as to rest against the inner surface 1a of the conveyance chamber.

During the sliding of the piston 3 inside the conveyance chamber 1, along the movement direction 3a, the lateral portion 4 slides on the inner surface 1a of the conveyance chamber 1 and, following the progression of the inner surface 1a, can undergo an expansion or a contraction in the presence, respectively, of an increase or of a decrease of the dimension of the transverse cross-section of the conveyance chamber 1 with respect to the movement direction 3a of the piston 3.

In this manner, the lateral portion 4 can be kept automatically in contact with the inner surface 1a of the conveyance chamber 1, thus always ensuring optimal scraping.

Thus, for example, if the machine according to the invention is constituted by a machine for forming and encasing salami or the like, the piston 3 can move inside the chamber for forming the meat, with its lateral portion 4 in contact with the inner walls of the forming chamber, and, subsequently, enter the encasing duct, which has a transverse cross-section of smaller dimensions than the forming chamber, with an automatic contraction toward the longitudinal axis 3b of the piston 3 of the lateral portion 4, which will thus be brought into contact with the inner wall of the encasing duct.

Similarly, in the return passage of the piston 3 from the encasing duct to the forming chamber, the lateral portion 4 undergoes an automatic expansion outwardly with respect to the longitudinal axis 3b of the piston 3, consequently coming back into contact with the inner wall of the forming chamber.

With reference, in particular, to the first embodiment described, if, during its translational motion inside the conveyance chamber 1 along the movement direction 3a, the piston 3 should pass through a region in which there is a decrease of the dimension of the transverse cross-section of the conveyance chamber 1, the elastic annular body 7 can pass from a spread condition to a narrowed condition, thus maintaining contact with the inner surface 1a of the conveyance chamber 1.

By contrast, if the piston 3 should pass through a region in which there is an increase of the dimension of the transverse cross-section of the conveyance chamber 1, the elastic annular body 7 can pass from the narrowed condition to the spread condition, thus still remaining in contact with the inner surface 1a of the conveyance chamber 1.

With reference to the second embodiment, however, during the movement of the piston 3 along its movement direction 3a inside the conveyance chamber 1, the peripheral bodies 8 can pass from a farther position to a nearer position with respect to the longitudinal axis 3b of the piston 3, in contrast with the action of the springs 9, should the piston 3 pass through a region in which there is a reduction in the dimension of the transverse cross-section of the conveyance chamber 1, and, vice versa, they can pass from a nearer position to a farther position with respect to the longitudinal axis 3b of the piston 3 under the action of the springs 9, should the piston 3 pass through a region in which there is an increase in the dimension of the transverse cross-section of the conveyance chamber 1, thus always remaining in contact with the inner surface 1a of the conveyance chamber 1.

In practice it has been found that the invention is capable of fully achieving the set aim and objects and, in particular, it should be noted that the pusher of the machine according to the invention is capable of preventing the food product from remaining inside the conveyance chamber, thanks to the ability for automatic expansion or contraction of the lateral portion of the piston.

It should further be noted that the machine according to the invention makes it possible to ensure the utmost cleaning of the parts in contact with the food product.

All the characteristics of the invention, indicated above as advantageous, convenient or similar, may also be missing or be substituted by equivalent characteristics.

The individual characteristics set out in reference to general teachings or to specific embodiments may all be present in other embodiments or may substitute characteristics in such embodiments.

The invention, thus conceived, is susceptible of numerous modifications and variations, all of which are within the scope of the appended claims.

In practice the materials employed, provided they are compatible with the specific use, and the dimensions and shapes, may be any according to requirements.

Moreover, all the details may be substituted by other, technically equivalent elements.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A machine for processing food products, comprising a chamber (1) for conveying the food products to be processed, which accommodates a pusher (2) provided with a piston (3) that can be actuated for translational motion along a movement direction (3a) to push said food products toward an output end of said conveyance chamber (1), said conveyance chamber (1) having at least one variation in the dimension of its transverse cross-section with respect to said movement direction (3a), **characterized in that** said pusher (2) has means for adjusting its transverse dimension with respect to said movement direction (3 a) which are adapted to produce an automatic expansion or contraction of at least one lateral portion (4) of said piston (3), with respect to a longitudinal axis (3b) of said piston (3) which is substantially parallel to said movement direction (3a), in order to make it possible to keep at least said at least one lateral portion (4) of said piston (3) substantially in contact with the inner surface (1a) of said conveyance chamber (1) during the movement of said piston (3) along said movement direction (3a).

2. The machine according to claim 1, **characterized in that** said at least one lateral portion (4) is loaded elastically to expand or contract with respect to said longitudinal axis (3a) of said piston (3) by way of its sliding on the inner surface (1a) of said conveyance chamber (1) at said at least one variation in the dimension of the transverse cross-section of said conveyance chamber (1).

3. The machine according to one or more of the preceding claims, **characterized in that** said piston (3) comprises a main body (6) that defines said longitudinal axis of said piston and supports laterally said at least one lateral portion (4) of said piston (3); said lateral portion (4) of said piston (3) being mounted on said main body (6) so that it can move in a substantially radial direction with respect to said longitudinal axis (3a).

4. The machine according to one or more of the preceding claims, **characterized in that** said at least one lateral portion (4) comprises at least one elastic annular body (7) with an open flat shape, which is fitted around said main body (6).

5. The machine according to one or more of the preceding claims, **characterized in that** said elastic annular body (7) is accommodated in a circular slot (6a) that is defined on the side wall of said main body (6).

6. The machine according to one or more of the preceding claims, **characterized in that** said at least one lateral portion (4) comprises at least one peripheral body (8) that is mounted laterally on said main body (6), said at least one peripheral body (8) being movable radially between a nearer position and a farther position with respect to said longitudinal axis (3a) of said piston (3), elastic pusher means being interposed between said at least one peripheral body (8) and said main body (6).

7. The machine according to one or more of the preceding claims, **characterized in that** said at least one lateral portion (4) comprises at least one pair of peripheral bodies (8), which are arranged mutually opposite with respect to said longitudinal axis (3a).

8. The machine according to claim 7,
**characterized in that** said peripheral bodies (8) comprise respective stop portions, which can be mutually engaged at said farther position of said peripheral bodies (8).

9. The machine according Z claims 7 or 8,
**characterized in that** said peripheral bodies (8) are arranged between a first axial abutment (11a), which is defined on said main body (6) of said piston (3), and a second axial abutment (11b), which is associated detachably with said main body (6), in order to allow the disassembly of said peripheral bodies (8) from said main body (6).

10. The machine according to claim 9,
**characterized in that** said second axial abutment (11b) is defined by a plate (12) that can be mated at one end of said main body (6) by way of an element with a female thread that can be engaged by a pin (14) with a male thread that is extended axially within said main body (6) and has a head (14a) that abuts against the opposite end of said main body (6).

## Patentansprüche

1. Eine Maschine zur Lebensmittelverarbeitung, die eine Kammer (1) zum Transportieren der zu verarbeitenden Lebensmittel umfasst, welche eine Schubvorrichtung (2) enthält, ausgestattet mit einem Kolben (3), der zu einer Translationsbewegung entlang einer Bewegungsrichtung (3a) angetrieben werden kann, um die Lebensmittel zu einem Ausgangsende der Transportkammer (1) zu schieben, wobei die Transportkammer (1) mindestens eine Variation in der Abmessung ihres transversalen Querschnitts in Bezug zu der Bewegungsrichtung (3a) hat, **dadurch gekennzeichnet, dass** die Schubvorrichtung (2) Mittel zum Einstellen ihrer transversalen Abmessung im Verhältnis zu der Bewegungsrichtung (3a) hat, die ausgebildet sind, um eine automatische Expansion oder Kontraktion mindestens eines Seitenabschnitts (4) des Kolbens (3), mit Bezug auf eine Längsachse (3b) des Kolbens (3), die im Wesentlichen parallel zu der Bewegungsrichtung (3a) ist, zu verursachen, um es zu ermöglichen, während der Bewegung des Kolbens (3) entlang der Bewegungsrichtung (3a) mindestens den mindestens einen Seitenabschnitt (4) des Kolbens (3) im Wesentlichen in Kontakt mit der Innenfläche (1a) der Transportkammer (1) zu halten.

2. Die Maschine gemäß Anspruch 1, **dadurch gekennzeichnet, dass** der mindestens eine Seitenabschnitt (4) elastisch gespannt ist, um im Verhältnis zu der Längsachse (3a) des Kolbens (3) zu expandieren oder zu kontrahieren, durch sein Gleiten auf der Innenfläche (1a) der Transportkammer (1) an der mindestens einen Variation in der Abmessung des transversalen Querschnitts der Transportkammer (1).

3. Die Maschine gemäß einem oder mehreren der obigen Ansprüche, **dadurch gekennzeichnet, dass** der Kolben (3) einen Hauptkörper (6) umfasst, der die Längsachse des Kolbens bestimmt und seitlich den mindestens einen Seitenabschnitt (4) des Kolbens (3) trägt; wobei der Seitenabschnitt (4) des Kolbens (3) so auf den Hauptkörper (6) montiert ist, dass er sich in einer im Wesentlichen radialen Richtung im Verhältnis zu der Längsachse (3a) bewegen kann.

4. Die Maschine gemäß einem oder mehreren der obigen Ansprüche, **dadurch gekennzeichnet, dass** der mindestens eine Seitenabschnitt (4) mindestens einen elastischen ringförmigen Körper (7) mit offener flacher Form umfasst, der um den Hauptkörper (6) herum montiert ist.

5. Die Maschine gemäß einem oder mehreren der obigen Ansprüche, **dadurch gekennzeichnet, dass** der elastische ringförmige Körper (7) in einer Ringnut (6a) untergebracht ist, die an der Seitenwand des Hauptkörpers (6) bestimmt ist.

6. Die Maschine gemäß einem oder mehreren der obigen Ansprüche, **dadurch gekennzeichnet, dass** der mindestens eine Seitenabschnitt (4) mindestens einen peripheren Körper (8) umfasst, der seitlich an dem Hauptkörper (6) montiert ist, wobei der mindestens eine periphere Körper (8) radial zwischen einer näheren Position und einer weiter entfernten Position mit Bezug auf die Längsachse (3a) des Kolbens (3) bewegt werden kann, und wobei elastische Schubmittel zwischen dem mindestens einen peripheren Körper (8) und dem Hauptkörper (6) angeordnet sind.

7. Die Maschine gemäß einem oder mehreren der obigen Ansprüche, **dadurch gekennzeichnet, dass** der mindestens eine Seitenabschnitt (4) mindestens ein Paar peripherer Körper (8) umfasst, die mit Bezug auf die Längsachse (3a) einander gegenüberliegend angeordnet sind.

8. Die Maschine gemäß Anspruch 7,
**dadurch gekennzeichnet, dass** die peripheren Körper (8) entsprechende Anschlagsabschnitte umfassen, die in der weiter entfernten Position der peripheren Körper (8) miteinander in Eingriff gebracht werden können.

9. Die Maschine gemäß Anspruch 7 oder 8,
**dadurch gekennzeichnet, dass** die peripheren Körper (8) zwischen einem ersten axialen Widerlager (11a), das an dem Hauptkörper (6) des Kolbens (3) bestimmt ist, und einem zweiten axialen Widerlager (11b) angeordnet sind, welches lösbar mit dem Hauptkörper (6) verbunden ist, um die Demontage der peripheren Körper (8) vom Hauptkörper (6) zu ermöglichen.

10. Die Maschine gemäß Anspruch 9,
**dadurch gekennzeichnet, dass** das zweite axiale Widerlager (11b) durch eine Platte (12) bestimmt ist, die an einem Ende des Hauptkörpers (6) durch ein Element mit Innengewinde in Eingriff gebracht werden kann, in das ein Stift (14) mit Außengewinde eingreifen kann, der sich axial innerhalb des Hauptkörpers (6) erstreckt und einen Kopf (14a) hat, der an das gegenüberliegende Ende des Hauptkörpers (6) anstößt.

## Revendications

1. Machine pour traiter des produits alimentaires, comprenant une chambre (1) pour transporter les produits alimentaires devant être traités, qui reçoit un poussoir (2) muni d'un piston (3) qui peut être actionné pour un mouvement de translation le long d'une direction de déplacement (3a) pour pousser lesdits produits alimentaires vers une extrémité de sortie de ladite chambre de transport (1), ladite chambre de transport (1) ayant au moins une variation dans la dimension de sa section transversale par rapport à ladite direction de déplacement (3a), **caractérisée en ce que** ledit poussoir (2) a des moyens pour ajuster sa dimension transversale par rapport à ladite direction de déplacement (3a) qui sont adaptés pour produire une détente ou une contraction automatique d'au moins une portion latérale (4) dudit piston (3), par rapport à un axe longitudinal (3b) dudit piston (3) qui est sensiblement parallèle à ladite direction de déplacement (3a), afin de permettre de maintenir au moins ladite au moins une portion latérale (4) dudit piston (3) sensiblement en contact avec la surface intérieure (1a) de ladite chambre de transport (1) pendant le mouvement du piston (3) le long de ladite direction de déplacement (3a).

2. Machine selon la revendication 1, **caractérisée en ce que** ladite au moins une portion latérale (4) est chargée élastiquement pour se détendre ou se contracter par rapport audit axe longitudinal (3a) dudit piston (3) au moyen de son glissement sur la surface intérieure (1a) de ladite chambre de transport (1) sur ladite au moins une variation de la dimension de la section transversale de ladite chambre de transport (1).

3. Machine selon une ou plusieurs des revendications précédentes, **caractérisée en ce que** ledit piston (3) comprend un corps principal (6) qui définit ledit axe longitudinal dudit piston et supporte latéralement ladite au moins une portion latérale (4) dudit piston (3) ; ladite portion latérale (4) dudit piston (3) étant montée sur ledit corps principal (6) de telle sorte qu'elle peut se déplacer dans une direction sensiblement radiale par rapport audit axe longitudinal (3a).

4. Machine selon une ou plusieurs des revendications précédentes, **caractérisée en ce que** ladite au moins une portion latérale (4) comprend au moins un corps annulaire élastique (7) avec une forme plate ouverte, qui est ajusté autour dudit corps principal (6).

5. Machine selon une ou plusieurs des revendications précédentes, **caractérisée en ce que** ledit corps annulaire élastique (7) est reçu dans une fente circulaire (6a) qui est définie sur la paroi latérale dudit corps principal (6).

6. Machine selon une ou plusieurs des revendications précédentes, **caractérisée en ce que** ladite au moins une portion latérale (4) comprend au moins un corps périphérique (8) qui est monté latéralement sur ledit corps principal (6), ledit au moins un corps périphérique (8) étant radialement mobile entre une position plus proche et une position plus éloignée par rapport audit axe longitudinal (3a) dudit piston (3), des moyens de poussée élastiques étant interposés entre ledit au moins un corps périphérique (8) et ledit corps principal (6).

7. Machine selon une ou plusieurs des revendications précédentes, **caractérisée en ce que** ladite au moins une portion latérale (4) comprend au moins une paire de corps périphériques (8), qui sont agencés mutuellement opposés par rapport audit axe longitudinal (3a).

8. Machine selon la revendication 7,
**caractérisée en ce que** lesdits corps périphériques (8) comprennent des portions de butée respectives, qui peuvent être mutuellement en prise sur ladite position plus éloignée desdits corps périphériques (8).

9. Machine selon les revendications 7 ou 8,
**caractérisée en ce que** lesdits corps périphériques (8) sont agencés entre une première butée axiale (11a), qui est définie sur ledit corps principal (6) dudit piston (3), et une seconde butée axiale (11b), qui est associée de manière détachable audit corps principal (6), afin de permettre le démontage desdits corps périphériques (8) dudit corps principal (6).

10. Machine selon la revendication 9,
**caractérisée en ce que** ladite seconde butée axiale (11b) est définie par une plaque (12) qui peut être appariée à une extrémité dudit corps principal (6) au moyen d'un élément avec un filetage femelle qui peut entrer en prise avec une goupille (14) avec un filetage mâle qui est étendue axialement à l'intérieur dudit corps principal (6) et a une tête (14a) qui vient en butée contre l'extrémité opposée dudit corps principal (6).
